# EUROPEAN PATENT SPECIFICATION

(11) **EP 2 206 300 B1**
(45) Date of publication and mention of the grant of the patent: **20.11.2013**
(21) Application number: 08723367.2
(22) Date of filing: 10.03.2008
(51) Int. Cl.: H04L 27/26, H04N 21/436, H04N 21/41, H04N 21/438, H04N 21/2383, H04N 21/4363

(54) **PHY Preamble including a MAC Header**
PHY Präambel mit einem MAC Header
Préambule PHY comprenant un Header MAC

(30) Priority: 03.10.2007 US 906741
(43) Date of publication of application: 14.07.2010
(73) Proprietor: Samsung Electronics Co., Ltd., Suwon-si, Gyeonggi-do, 443-742 (KR)
(72) Inventor: NIU, Huaning, Sunnyvale, California 94086 (US); NGO, Chiu, San Francisco, California 94132 (US)
(74) Representative: Waddington, Richard
(86) International application number: PCT/KR2008/001330
(87) International publication number: WO 2009/044970

(56) References cited:
- US-A1- 2004 120 292
- US-A1- 2006 029 099
- US-A1- 2006 056 443
- US-A1- 2007 076 752
- US-A1- 2007 223 527

## Description

### Technical Field

The present invention relates to wireless communication systems and in particular, to efficient communication of frame structures between transmitters and receivers in wireless communication systems.

### Background Art

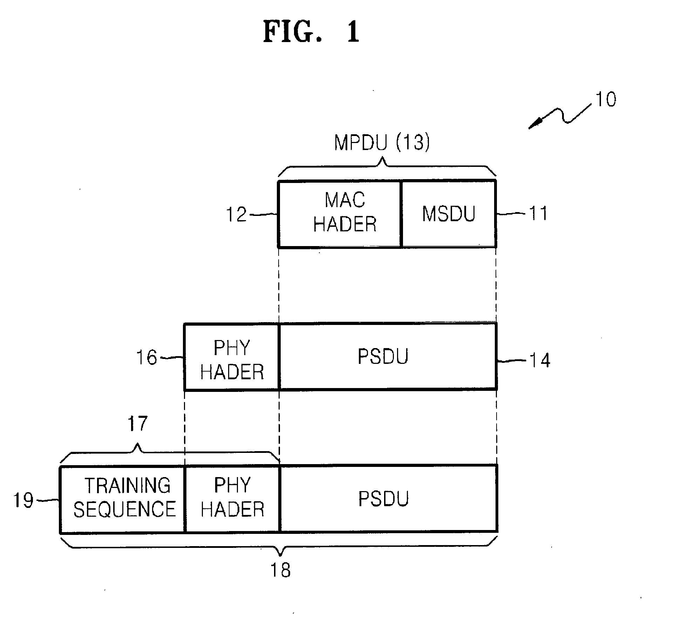

In many wireless communication systems, a frame structure is used for data transmission between a transmitter and a receiver. For example, the IEEE 802.11 standard uses frame aggregation in a Media Access Control (MAC) layer and a physical (PHY) layer. Fig. 1 shows a general framing structure 10 for a wireless communication system including one or more transmitters and one or more receivers. In a typical transmitter, a MAC layer receives a MAC Service Data Unit (MSDU) 11 from an upper layer and attaches a MAC header 12 thereto, in order to construct a MAC Protocol Data Unit (MPDU) 13. The MAC header 12 includes MAC related information such as a source address (SA) and a destination address (DA), a network ID (NID), etc. The MPDU 13 is a part of a PHY Service Data Unit (PSDU) 14 and is transferred to a PHY layer in the transmitter to attach a PHY header 16 (PHY-SIG) thereto to construct a PHY Protocol Data Unit (PPDU) 18. The PHY header 16 includes parameters for determining a transmission scheme, for example, a coding/ modulation scheme, etc. Further, before transmission as a packet from a transmitter to a receiver, a training sequence 19 is attached to the PPDU 18, wherein the training sequence 19 can include channel estimation and synchronization information. The PHY header 16 and the training sequence 19 form a PHY preamble 17.

Typically, the most reliable coding/modulation scheme is applied to a PHY signal field in the PHY header 16, and an additional cyclic redundancy code (CRC) is added to ensure this information is received correctly at the receiver. The MAC header 12 and payload data in the MSDU 11 are usually treated equally and transmitted using the same coding/modulation scheme, which is less robust than that for the PHY signal field of the PHY header 16. Further, before transmission as a packet from a transmitter to a receiver, a training sequence 19 is attached to the PPDU 18, wherein the training sequence 19 can include channel estimation and synchronization information.

Document US 2007/223527 A1 (SHAO HUAI-RONG [US] ET AL) 27 September 2007 (2007-09-27) discloses a device exploiting a WiHD packet showing a PHY preamble separated from a MAC Header, the first preceding the second.

### Disclosure of Invention

### Technical Problem

At the receiver, in order to determine that the receiver is the intended destination for a packet, the receiver must decode the MPDU 13, including the MSDU 11 and the MAC header 12. The receiver then checks the DA in the decoded MAC header 12 to determine if the packet was intended for that receiver. If based on the DA in the MAC header 12 the receiver determines that the packet was not intended for that receiver, then the receiver discards the entire packet even though the receiver already spent time decoding the entire MPDU 13 to access the MAC header 12 therein. However, communicating a packet and then discarding it is time consuming and wastes communication bandwidth.

### Technical Solution

The present invention provides a method and devices for wireless transmission of information.

### Advantageous Effects

According to the present invention, MAC header, including DA of a packet, is placed in PHY preamble. As such a receiver can know immediately whether the packet is intended for the receiver or not. This achieves transmission efficiency by saving time in not receiving and/or processing the MSDU which needs to be discarded, thereby conserving channel bandwidth.

Also, since the most reliable coding/modulation schemes are applied and CRC is added to the PHY preamble including the MAC header , the receiver can recieve the MAC header correctly.

### Description of Drawings

Fig. 1 shows a conventional frame structure for wireless transmission of data.

Fig. 2A shows an example wireless system comprising a network of multiple wireless devices implementing a process of forming and communicating a frame over wireless channels, according to an embodiment of the present invention.

Fig. 2B shows an example of directional beams for transmission over a high-rate channel in the wireless system of Fig. 2A.

Fig. 3 shows an example of a frame format for transmission of information, according to the present invention.

Fig. 4 shows an example PPDU frame format, according to the present invention.

Fig. 5 shows a functional block diagram for forming and transmitting a PPDU frame according to the present invention.

Fig. 6 shows a functional block diagram of a wireless network that implements wireless transmission of information frames between wireless devices, according to an embodiment of the present invention.

### Best Mode

According to the present invention, one embodiment involves constructing a payload unit for data, appending a preamble to the payload unit, wherein the preamble comprises a PHY preamble including a MAC header for the data unit, and transmitting at least the preamble of the data unit over a wireless channel.

Appending a preamble may include appending a preamble to the payload unit to generate a data unit frame, wherein the preamble includes a MAC header, a training sequence, and a PHY header for the data unit frame, and transmitting at least the preamble of the data unit frame over a wireless channel. The training sequence is useful for synchronization and channel estimation.

In one implementation, the payload unit comprises a MAC (media access control) Service Data Unit (MSDU). The data unit frame comprises a PHY (physical) Protocol Data Unit (PPDU). The preamble comprises a physical layer (PHY) training sequence and the PHY header containing information including a coding and modulation scheme, and a MAC header containing a SA, a DA, a NID, etc. The PHY preamble comprises a PHY signaling field (PHY-SIG field), and the MAC header is in the PHY-SIG field of the PHY preamble.

The wireless transmission method may further include receiving the preamble of the data unit frame, checking the destination address in the preamble, and receiving the payload unit of the data unit frame only if the destination address indicates the data unit frame is intended for the receiver. The wireless transmission method may further include receiving the preamble of the data unit frame, checking the destination address in the preamble, and decoding the payload unit of the data unit frame only if the destination address indicates the data unit frame is intended for the receiver.

### Mode for Invention

The present invention provides a method and system for formation and communication of information frames in wireless communication systems. In one embodiment, a method and system are provided for formation and communication of hierarchical frame structures in wireless communication systems.

An example implementation for a 60 GHz frequency band wireless network is described below. Such implementation is useful with WirelessHD (WiHD) applications. WirelessHD is an industry-led effort to define a wireless digital network interface specification for wireless HD digital signal transmission on the 60 GHz frequency band, e.g., for consumer electronics (CE) and other electronic products. An example WirelessHD network utilizes a 60 GHz-band mmWave technology to support a physical (PHY) layer data transmission rate of multi-Gbps (gigabits per second), and can be used for transmitting uncompressed high definition television (HDTV) signals wirelessly. The wireless devices can have multiple antennas, wherein directional beams are formed for transmitting/receiving HD video information using orthogonal frequency division multiplexing (OFDM). The present invention is useful with other wireless communication systems as well.

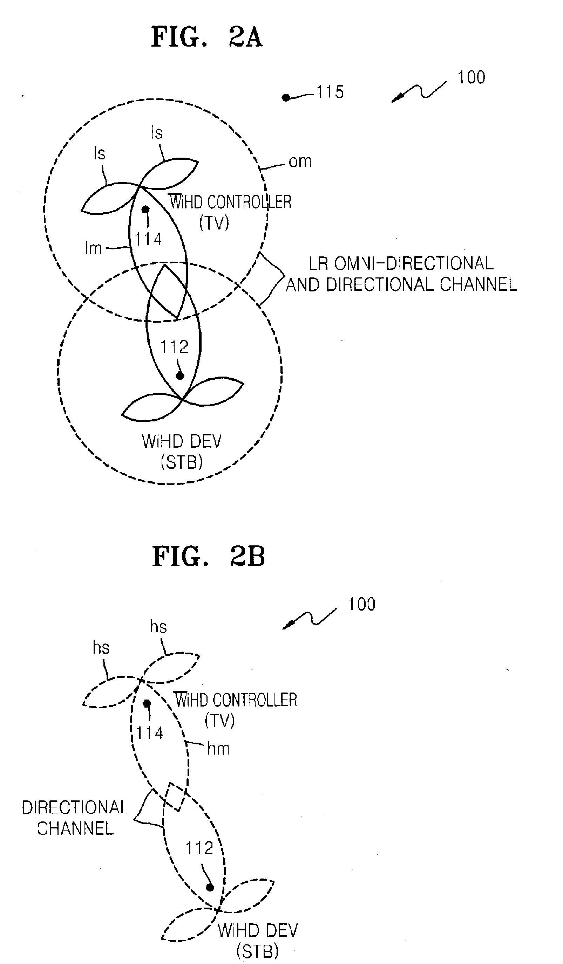

The implementation described below involves formation and communication of PPDU frames between transmitters and receivers in a wireless communication system over wireless channels (e.g., radio frequency (RF)). Figs. 2A-B show an example of a WirelessHD system comprising a network 100 of multiple WirelessHD devices 112 and 114. Each WirelessHD device utilizes two channels: a symmetric low-rate (LR) control channel, and an asymmetric high-rate (HR) data channel. The LR channel operates in two modes: (1) an omni-directional mode, which is used for the transmission of control data (e.g., beacons, association/disassociation, device discovery, acknowledgement (ACK), etc.), and supports data rates of about 2.5 ∼ 10 Mbps; and (2) a directional or beamformed mode, which is used for transmitting audio streams, wherein the beamformed mode supports data rates of about 20∼40 Mbps.

The HR data channel is a directional (beamformed) channel which is used for the transmission of uncompressed video from the WirelessHD sender (e.g., transmitter) 112 to the WirelessHD receiver 114. An example scenario in Fig. 2A, involves the WirelessHD sender 112 (e.g., a set-top box (STB)), transmitting uncompressed video to the WirelessHD receiver 114 (e.g., HDTV), over a HR channel. The HR channel supports data rates of multi-Gbps. In this scenario, the LR channel is used to send ACKs from the WirelessHD receiver 114 to the WirelessHD sender 112. Fig. 2A further shows an omni-directional transmission om, main lobes lm, and side lobes ls, for the LR channel.

The embodiments of the present invention described herein, implements formation and communication of information packets on the HR channel. Fig. 2B shows directional beams, comprising main lobes hm and side lobes hs, for the HR channel. Although the example herein is based on communication between the sender 112 and the receiver 114, those skilled in the art of wireless communications will recognize that such communication can be extended to other devices in the network 100 such as a wireless device 115 (Fig. 2A) that can be a source or sink of information.

High-rate transmission over the HR channel utilizes OFDM communication with beamforming, and low-rate transmission over the LR channel uses narrower band OFDM with repetitions. In one example of a high-rate WirelessHD transmission over the HR channel, there are a total of 336 data subcarriers in one OFDM symbol. Assuming binary phase-shift keying (BPSK) with ½ coding rate, an 8-bit cyclic redundancy code check, and 6 tail bits for convolutional codes, a symbol can be transmitted as (336 - 8 - 6) / 2 = 161 bits. As such, the maximum packet size is around 600K bits, and requires 20 bits in a PHY signaling field (PHY-SIG field) of the PHY preamble to signal the packet length to the receiver. Further, four different coding/ modulation rates are also specified, which require 2 bits in the PHY-SIG field to signal to the receiver.

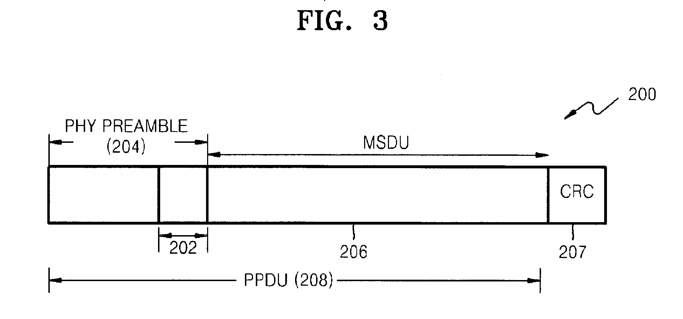

Unused bits available in the PHY-SIG field are used to transmit other information, such as a packet MAC header, according to an embodiment of the present invention. Fig. 3 shows an example of a hierarchical framing structure for a packet 200 for transmission from the sender 112 to the receiver 114 over the HR channel, using said unused PHY-SIG field bits. As shown in Fig. 3, a PHY-SIG field 202 is placed in a PHY preamble 204, wherein the PHY preamble 204 is attached to a MSDU 206 to construct a PPDU 208. The MSDU 206 carries HD video information payload of the packet 200. A CRC field 207 in the packet is provided for the receiver to check that the information in the MSDU 206 is received correctly.

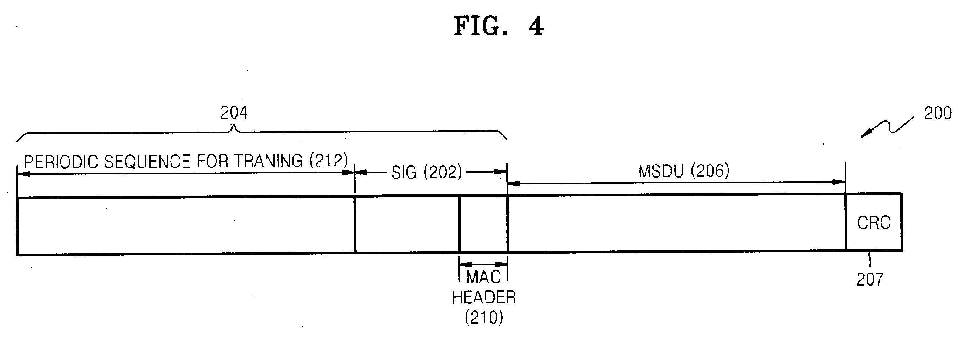

Referring to the more detailed example in Fig. 4, the PHY preamble 204 includes a PHY-SIG field 202 which indicates the length of the packet, the modulation and coding rate, etc. The PHY preamble 204 further includes training sequences 212 for channel estimation, synchronization, automatic gain control (AGC) setting, etc. According to a preferred embodiment of the present invention, the MAC header 210 is placed in the PHY-SIG field 202. The MAC header 210 can contain a simplified MAC address, sequence number or fragmentation number for retransmission (including selective retransmission), and other bits as may be needed for indicating aggregation, etc. A CRC field 209 in the PHY-SIG field 202 is provided for the receiver to check the information in the PHY-SIG field including the PHY related signaling information as well as the MAC header. The CRC field 207 (Fig. 3) in the packet allows the receiver to check that the information in the MSDU 206 is received correctly.

Upon receiving the PHY preamble 204 of the packet 200 over the HR channel, a receiver accesses the information in the MAC header 210 that is part of the PHY-SIG field 202 of the PHY preamble 204, to detemnine if the packet 200 was intended for this receiver. As such, the receiver need not spend time and resources decoding the MSDU 206 to gain access to information that is in the MAC header 210. Based on the address in the MAC header 210, the receiver can know immediately whether the packet 200 is intended for (i.e., addressed to) this receiver or not. If the packet 200 is not intended for this receiver, then the receiver need not receive and/or process the payload in the MSDU 206 (this achieves transmission efficiency by saving time in not receiving and/or processing the MSDU 206 which needs to be discarded, thereby conserving channel bandwidth).

Further, placing the MAC header 210 in the PHY-SIG field 202 allows a more reliable transmission of the information in the MAC header 210. This is because typically the most reliable modulation and coding scheme is applied to the PHY-SIG field 202, and the additional CRC 209 is added to allow the receiver to determine if this information is received correctly.

Further, including the MAC header 210 within the PHY-S1G field 202 allows efficient application of unequal error protection (UEP) schemes. An example UEP scheme involves applying error protection to a video payload in the MSDU 206, wherein the perceptually important bits (e.g., most significant bits (MSBs)) have higher error protection than less important bits (e.g., least significant bits (LSBs)) of the video information. Since all the information bits in the MAC header 210 are equally important, the UEP is not applied to the MAC header 210. Then an equal error protection (EEP) scheme is applied to all the information bits of the MAC header 210 for transmission. This is advantageous over conventional approaches where the MAC header is transmitted together with the video payload in the MSDU with application of UEP, wherein the MAC header information is not reliably protected. According to the present invention, including the MAC header 210 within the PHY-SIG field 202 allows transmitting the MAC header 210 with EEP, and transmission of the video transmission in the MSDU 206 with UEP which consumes less bandwidth than EEP.

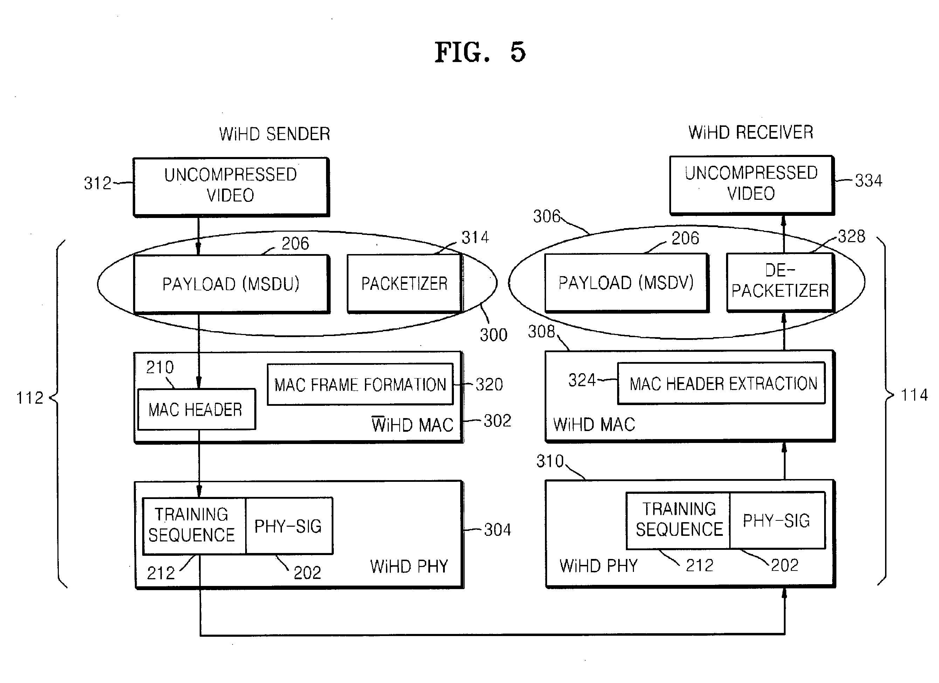

Fig. 5 shows an example functional block diagram of wireless communication stations, such as the WirelessHD sender 112 and the WirelessHD receiver 114, implementing a hierarchical framing structure for formation and communication of a information frames such as a PPDU (e.g., PPDU 208 in Fig. 3), according to the present invention. The WirelessHD sender 112 comprises a packetization module 300, a MAC layer (WirelessHD MAC) 302 and a PHY layer (WirelessHD PHY) 304. The WirelessHD receiver 114 comprises a depacketization module 306, a MAC layer (WirelessHD MAC) 308 and a PHY layer (WirelessHD PHY) 310.

The WirelessHD sender 112 inputs uncompressed video information 312 from an upper layer (e.g., a video source device). A packetizer 314 in the packetization module 300 generates a data payload such as the MSDU 206 in Fig. 4, from the uncompressed video information 312. The data payload 206 is provided to the WirelessHD MAC 302. A MAC frame formation module 320 in the WirelessHD MAC 302 converts the data payload 206 into a MAC packet (MPDU), and generates a MAC header 210 to be included in a PHY-SIG field 202 of a preamble sequence 204, as described above by example in relation to Fig. 4. The WirelessHD MAC 302 provides the MAC packet including the MAC header 210 to the WirelessHD PHY 304, which further adds a preamble including the periodic training sequences 212, and a PHY-SIG field 202 for transmission of a packet 200 (Fig. 4) to the receiver 114 over the HR channel. The PHY-SIG field 202 includes said MAC header 210, and may further include a PHY preamble.

The WirelessHD PHY 310 of the WirelessHD receiver 114 receives the training sequence 212 and the PHY-SIG field 202 from the HR channel to provide to the WirelessHD MAC 308. A MAC header extraction module 324 in the WirelessHD MAC 308 examines the MAC header 210 in the received PHY-SIG field 202 and extracts the information in the MAC header 210. Based on the address information in that MAC header 210, the header extraction module 324 can know immediately whether the packet 200 is intended for this receiver 114. If the packet 200 is not intended for the receiver 114, then the receiver 114 need not receive the rest of the packet 200 beyond the PHY-SIG field 202, and need not decode the MSDU 206 therein. If based on the address in the MAC header 210 the header extraction module 324 determines that the packet 200 is intended for the receiver 114, then the receiver 114 receives the rest of the packet 200 and a depacketizer 328 in the depacketization module 306 obtains the payload of the MSDU 206 in the received packet. The payload includes uncompressed video information 334 that is provided to the upper layers at the receiver 114. The example MAC header comprises one or more of a Frame control field (which includes packet type), a Length of the MAC frame, Destination and Source addresses, and a Sequence control.

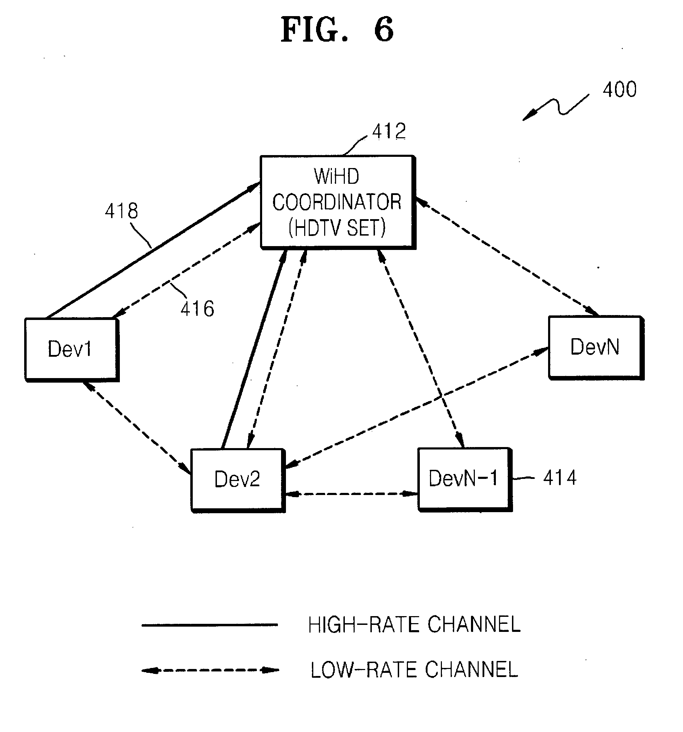

Fig. 6 shows a functional block diagram of a wireless network 400 that implements uncompressed HD video transmission between wireless device formation and communication of PPDUs, according to an embodiment of the present invention. The network 400 includes a WirelessHD coordinator 412 and WirelessHD stations 414 (e.g., Dev1, ..., DevN). The WirelessHD stations 414 utilize a LR wireless channel 416 (dashed arrows in Fig. 6) for communication therebetween. Each station 414 uses the low-rate channel 416 for communications with other stations 414. The low-rate channel 416 can support bi-directional transmission, e.g., with at most 20 Mbps throughput. The low-rate channel 416 is mainly used to transmit control frames such as acknowledgement (ACK) frames.

The WirelessHD coordinator 412 uses a LR channel 416, and a HR data channel 418 for communication with the stations 414. The HR channel 418 only supports single direction unicast transmission over directional beams established by beamforming, with, e.g., multi-GB/s bandwidth to support uncompressed HD video transmission. The coordinator 412 transmits information to the stations 414 over the HR channel using the frame formation and communication processes described above in relation to Figs. 2-5. The coordinator 412 uses a PPDU format as shown by example in Fig. 4 for data communication over the HR channel, wherein the PPDU format integrates the PHY-SIG and the MAC header fields, as described. Such a PPDU format also provides power saving when based on the MAC header a receiver determines that an incoming packet is not intended for the receiver, and does not receive and/or decode the rest of the packet payload.

As is known to those skilled in the art, the aforementioned example architectures described above, according to the present invention, can be implemented in many ways, such as program instructions for execution by a processor, as logic circuits, as an application specific integrated circuit, as firmware, etc. The present invention has been described in considerable detail with reference to certain preferred versions thereof; however, other versions are possible. Therefore, the scope of the appended claims should not be limited to the description of the preferred versions contained herein.

## Claims

1. A method for wireless transmission of information, comprising the steps of:
constructing a payload unit for data;
appending a preamble, including a PHY preamble to generate a data unit frame, to the payload unit, wherein the preamble includes:
a physical layer, PHY, preamble including a MAC, media access control, header including a destination address for the payload unit, and
a header for the data unit frame; and
transmitting at least the preamble of the payload unit over a wireless channel,
the method further comprising:
receiving the PHY preamble of the data unit frame;
checking the destination address in the PHY preamble; and
decoding the payload unit of the data unit frame only if the destination address indicates that the data unit frame is intended for the receiver.

2. The method of claim 1, wherein the payload unit comprises a MAC Service Data Unit, MSDU.

3. The method of claim 1 or claim 2, wherein the data unit frame comprises a PHY Protocol Data Unit, PPDU.

4. The method of any preceding claim, wherein the PHY preamble comprises a PHY signaling field, PHY-SIG field, and the MAC header is in the PHY-SIG field of the PHY preamble.

5. The method of any preceding claim further including the steps of:
receiving the preamble of the data unit frame;
checking the destination address in the PHY preamble; and
decoding the payload unit of the data unit frame only if the destination address indicates the data unit frame is intended for the receiver.

6. The method of any one of claims 1 to 5, wherein the wireless channel comprises a 60 GHz frequency band channel.

7. The method of claim 6, wherein the data includes uncompressed video information.

8. The method of claim 6, wherein the data includes high definition uncompressed video information.

9. The method of any one of claims 1 to 8, wherein transmitting the data unit frame over a wireless channel further includes transmitting the data unit frame by directional transmission beams over a wireless channel.

10. The method of claim 9, wherein transmitting the data unit frame over a wireless channel further includes transmitting the data unit frame by directional transmission beams over a wireless channel using orthogonal frequency division multiplexing, OFDM.

11. A wireless communication system comprising:
a wireless transmitter (Wi HD SENDER) having a packetizing module (300) configured for constructing a payload unit for data;
a formation module (302, 304) configured for generating PHY signaling information for the payload unit, the PHY signaling information including a preamble, including a PHY preamble to generate a data unit frame, for the payload unit, wherein the preamble includes:
a physical layer, PHY, preamble including a MAC, media access control, header including a destination address for the payload unit, and
a header for the data unit frame; and
a transmission module for transmitting at least the preamble information over a wireless channel; and
a wireless receiver comprising:
a receiving module configured for receiving PHY preamble information for a payload unit over a wireless channel; and
an examining module configured for checking a destination address in the PHY preamble information;
wherein the receiving module is adapted to decode the payload unit only if the destination address indicates that the data unit frame is intended for the receiver;
wherein the wireless transmitter is adapted to communicate with the wireless receiver.

12. A wireless receiver comprising:
a receiving module configured for receiving PHY preamble information for a payload unit over a wireless channel; and
an examining module configured for checking a destination address in the PHY preamble information;
wherein the receiving module is adapted to decode the payload unit only if the destination address indicates that the data unit frame is intended for the receiver.

## Patentansprüche

1. Verfahren zur drahtlosen Übertragung von Informationen, aufweisend die folgenden Schritte:
Erstellen einer Nutzdateneinheit für Daten;
Anhängen einer Präambel, die eine PHY-Präambel aufweist, um einen Dateneinheitsrahmen zu erzeugen, an die Nutzdateneinheit, wobei die Präambel aufweist:
eine Präambel der physikalischen Schicht, PHY, die einen Medienzugriffssteuerungs, MAC, -Header aufweist, der eine Zieladresse für die Nutzdateneinheit aufweist, und
einen Header für den Dateneinheitsrahmen; und
Senden mindestens der Präambel der Nutzdateneinheit über einen drahtlosen Kanal,
wobei das Verfahren ferner aufweist:
Empfangen der PHY-Präambel des Dateneinheitsrahmens;
Prüfen der Zieladresse in der PHY-Präambel; und
Decodieren der Nutzdateneinheit des Dateneinheitsrahmens nur, wenn die Zieladresse anzeigt, dass der Dateneinheitsrahmen für den Empfänger bestimmt ist.

2. Verfahren nach Anspruch 1, wobei die Nutzdateneinheit eine MAC-Dienstdateneinheit, MSDU, aufweist.

3. Verfahren nach Anspruch 1 oder 2, wobei der Dateneinheitsrahmen eine PHY-Protokolldateneinheit, PPDU, aufweist.

4. Verfahren nach einem der vorhergehenden Ansprüche, wobei die PHY-Präambel ein PHY-Signalisierungsfeld, PHY-SIG-Feld, aufweist, und der MAC-Header im PHY-SIG-Feld der PHY-Präambel ist.

5. Verfahren nach einem der vorhergehenden Ansprüche, ferner aufweisend die folgenden Schritte:
Empfangen der Präambel des Dateneinheitsrahmens;
Prüfen der Zieladresse in der PHY-Präambel; und
Decodieren der Nutzdateneinheit des Dateneinheitsrahmens nur, wenn die Zieladresse anzeigt, dass der Dateneinheitsrahmen für den Empfänger bestimmt ist.

6. Verfahren nach einem der Ansprüche 1 bis 5, wobei der drahtlose Kanal einen Kanal im 60-GHz-Frequenzband aufweist.

7. Verfahren nach Anspruch 6, wobei die Daten unkomprimierte Videoinformationen aufweisen.

8. Verfahren nach Anspruch 6, wobei die Daten unkomprimierte Videoinformationen hoher Auflösung aufweisen.

9. Verfahren nach einem der Ansprüche 1 bis 8, wobei das Senden des Dateneinheitsrahmens über einen drahtlosen Kanal ferner ein Senden des Dateneinheitsrahmens durch gerichtete Sendestrahlen über einen drahtlosen Kanal aufweist.

10. Verfahren nach Anspruch 9, wobei das Senden des Dateneinheitsrahmens über einen drahtlosen Kanal ferner ein Senden des Dateneinheitsrahmens durch gerichtete Sendestrahlen über einen drahtlosen Kanal unter Verwendung des orthogonalen Frequenzmultiplex, OFDM,-Verfahrens aufweist.

11. Drahtloses Kommunikationssystem, aufweisend:
einen drahtlosen Sender (WiRD SENDER) mit einem Paketiermodul (300), das so konfiguriert ist, dass es eine Nutzdateneinheit für Daten erstellt;
ein Bildungsmodul (302, 304), das so konfiguriert ist, dass es PHY-Signalisierungsinformationen für die Nutzdateneinheit erzeugt, wobei die PHY-Signalisierungsinformationen eine Präambel, die eine PHY-Präambel aufweist, um einen Dateneinheitsrahmen zu erzeugen, für die Nutzdateneinheit aufweisen, wobei die Präambel aufweist:
eine Präambel der physikalischen Schicht, PHY, die einen Medienzugriffssteuerungs, MAC, -Header aufweist, der eine Zieladresse für die Nutzdateneinheit aufweist, und
einen Header für den Dateneinheitsrahmen; und
ein Sendemodul zum Senden mindestens der Präambelinformationen über einen drahtlosen Kanal; und
einen drahtlosen Empfänger, aufweisend:
ein Empfangsmodul, das so konfiguriert ist, dass es PHY-Präambelinformationen für eine Nutzdateneinheit über einen drahtlosen Kanal empfängt; und
ein Prüfmodul, das so konfiguriert ist, dass es eine Zieladresse in den PHY-Präambelinformationen prüft;
wobei das Empfangsmodul so ausgelegt ist, dass es die Nutzdateneinheit nur decodiert, wenn die Zieladresse anzeigt, dass der Dateneinheitsrahmen für den Empfänger bestimmt ist;
wobei der drahtlose Sender so ausgelegt ist, dass er mit dem drahtlosen Empfänger kommuniziert.

12. Drahtloser Empfänger, aufweisend:
ein Empfangsmodul, das so konfiguriert ist, dass es PHY-Präambelinformationen für eine Nutzdateneinheit über einen drahtlosen Kanal empfängt; und
ein Prüfmodul, das so konfiguriert ist, dass es eine Zieladresse in den PHY-Präambelinformationen prüft;
wobei das Empfangsmodul so ausgelegt ist, dass es die Nutzdateneinheit nur decodiert, wenn die Zieladresse anzeigt, dass der Dateneinheitsrahmen für den Empfänger bestimmt ist.

## Revendications

1. Procédé pour une transmission sans fil d'informations, comprenant les étapes suivantes :
construire une unité de charge utile pour des données ;
ajouter un préambule, comprenant un préambule PHY pour générer une trame d'unité de données, à l'unité de charge utile, où le préambule comprend :
un préambule de couche physique, PHY, comprenant un en-tête MAC, commande d'accès au support, comprenant une adresse de destination pour l'unité de charge utile, et
un en-tête pour la trame d'unité de données ; et
transmettre au moins le préambule de l'unité de charge utile par un canal sans fil,
le procédé comprenant en outre les étapes suivantes :
recevoir le préambule PHY de la trame d'unité de données ;
vérifier l'adresse de destination dans le préambule PHY ; et
décoder l'unité de charge utile de la trame d'unité de données seulement si l'adresse de destination indique que la trame d'unité de données est destinée au récepteur.

2. Procédé selon la revendication 1, dans lequel l'unité de charge utile comprend une unité de données de service MAC, MSDU.

3. Procédé selon la revendication 1 ou la revendication 2, dans lequel la trame d'unité de données comprend une unité de données de protocole PHY, PPDU.

4. Procédé selon l'une quelconque des revendications précédentes, dans lequel le préambule PHY comprend un champ de signalisation PHY, un champ PHY-SIG, et l'en-tête MAC se trouve dans le champ PHY-SIG du préambule PHY.

5. Procédé selon l'une quelconque des revendications précédentes comprenant en outre les étapes suivantes :
recevoir le préambule de la trame d'unité de données ;
vérifier l'adresse de destination dans le préambule PHY ; et
décoder l'unité de charge utile de la trame d'unité de données seulement si l'adresse de destination indique que la trame d'unité de données est destinée au récepteur.

6. Procédé selon l'une quelconque des revendications 1 à 5, dans lequel le canal sans fil comprend un canal de bande de fréquences de 60 GHz.

7. Procédé selon la revendication 6, dans lequel les données comprennent des informations vidéo non-compressées.

8. Procédé selon la revendication 6, dans lequel les données comprennent des informations vidéo non-compressées de haute définition.

9. Procédé selon l'une quelconque des revendications 1 à 8, dans lequel transmettre la trame d'unité de données par un canal sans fil comprend en outre de transmettre la trame d'unité de données par faisceaux de transmission directionnels par un canal sans fil.

10. Procédé selon la revendication 9, dans lequel transmettre la trame d'unité de données par un canal sans fil comprend en outre de transmettre la trame d'unité de données par faisceaux de transmission directionnels par un canal sans fil au moyen d'un multiplexage par division en fréquences orthogonales, OFDM.

11. Système de communication sans fil comprenant :
un émetteur Wi-HD de transmetteur sans fil ayant un module de mise en paquets (300) configuré pour construire une unité de charge utile pour des données ;
un module de formation (302, 304) configuré pour générer des informations de signalisation PHY pour l'unité de charge utile, les informations de signalisation PHY comprenant un préambule, comprenant un préambule PHY pour générer une trame d'unité de données, pour l'unité de charge utile, où le préambule comprend :
un préambule de couche physique, PHY, comprenant un en-tête MAC, commande d'accès au support, comprenant une adresse de destination pour l'unité de charge utile, et
un en-tête pour la trame d'unité de données ; et
un module de transmission pour transmettre au moins les informations de préambule par un canal sans fil ; et
un récepteur sans fil comprenant :
un module de réception configuré pour recevoir les informations de préambule PHY pour une unité de charge utile par un canal sans fil ; et
un module d'examen configuré pour vérifier une adresse de destination dans les informations de préambule PHY ;
où le module de réception est conçu pour décoder l'unité de charge utile seulement si l'adresse de destination indique que la trame d'unité de données est destinée au récepteur ;
où l'émetteur sans fil est conçu pour communiquer avec le récepteur sans fil.

12. Récepteur sans fil comprenant :
un module de réception configuré pour recevoir des informations de préambule PHY pour une unité de charge utile par un canal sans fil ; et
un module d'examen configuré pour vérifier une adresse de destination dans les informations de préambule PHY ;
où le module de réception est conçu pour décoder l'unité de charge utile seulement si l'adresse de destination indique que la trame d'unité de données est destinée au récepteur.
